(19) Europäisches Patentamt
European Patent Office
Office européen des brevets

(11) EP 2 479 409 B1

(12) FASCICULE DE BREVET EUROPEEN

(45) Date de publication et mention
de la délivrance du brevet:
**12.04.2017 Bulletin 2017/15**

(51) Int Cl.:
*F02D 41/02* (2006.01)   *F02D 41/40* (2006.01)
*F01N 3/023* (2006.01)   *F01N 3/20* (2006.01)

(21) Numéro de dépôt: **11195001.0**

(22) Date de dépôt: **21.12.2011**

(54) **Procede pour une maitrise de la temperature des gaz d'echappement pour optimiser la regeneration d'un filtre a particules**

Verfahren zur Einschränkung der Temperatur von Auspuffgasen zur Optimierung der Regeneration eines Partikelfilters

Method for controlling the temperature of exhaust gases in order to optimise the regeneration of a particle filter

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.01.2011 FR 1150562**

(43) Date de publication de la demande:
**25.07.2012 Bulletin 2012/30**

(73) Titulaire: **Peugeot Citroën Automobiles SA
78140 Vélizy Villacoublay (FR)**

(72) Inventeurs:
• **Hayat, Olivier
  78000 VERSAILLES (FR)**
• **Lefebvre, Damien
  92800 PUTEAUX (FR)**
• **Calendini, Pierre Olivier
  92210 SAINT CLOUD (FR)**
• **Creff, Yann
  38138 Les Côtes d'Arey (FR)**
• **Lepreux, Olivier
  69330 MEYSIEU (FR)**
• **Wagon, Gilles
  78570 ANDRESY (FR)**

(56) Documents cités:
**EP-A1- 1 918 542**   **EP-A1- 1 921 288**
**EP-A1- 2 031 217**   **WO-A2-2006/125151**
**FR-A1- 2 921 416**   **FR-A1- 2 957 381**
**US-A1- 2010 083 639**

EP 2 479 409 B1

## Description

### DOMAINE DE L'INVENTION

La présente invention concerne le domaine du Contrôle Moteur et, plus particulièrement, le domaine du contrôle de moteurs Diesel équipés de filtres à particules. L'invention propose un procédé permettant la maîtrise de la température des gaz d'échappement pour optimiser la régénération des filtres à particules.

### ART ANTERIEUR

Au cours des dernières années, les moteurs Diesel ont été de plus en plus utilisés dans le domaine de l'automobile en Europe. Parallèlement à cette augmentation du nombre de véhicules à moteur Diesel, les normes sur les émissions polluantes sont devenues de plus en plus strictes. Il s'agit, par exemple, des normes Euro 5 et Euro 6.

Quatre polluants sont actuellement réglementés : les hydrocarbures (HC), les oxydes de carbone ($CO_x$ : CO et $CO_2$), les oxydes d'azote ($NO_x$ : NO et $NO_2$), et les particules de suie (PM).

Malgré des avancées importantes dans la technologie des moteurs à combustion interne, ces normes ne pourront sans doute pas être satisfaites sans l'utilisation extensive de systèmes de post-traitement des gaz d'échappement.

Les $NO_x$ et les particules de suie sont les polluants les plus problématiques pour les systèmes de post-traitement de moteurs Diesel.

Une méthode de traitement des particules de suie consiste à ajouter un filtre à particules dans la ligne d'échappement des gaz de combustion. Le filtre permet de retenir une forte proportion de particules de suie. Cependant, au fur et à mesure que les particules s'y accumulent la perte de charge augmente dans le filtre, ce qui peut, à terme, diminuer certaines performances du moteur.

Une solution consiste en un nettoyage ou régénération du filtre en brûlant régulièrement les particules de suie collectées par le filtre à particules. Cette régénération est effectuée en augmentant l'énergie thermique des gaz d'échappement dans la ligne d'échappement. Pour ce faire, il suffit de contrôler finement la quantité de carburant injectée et le moment d'injection dans un cycle moteur : pré-injection, injection principale et post-injection. C'est particulièrement la post-injection qui permet la régénération du filtre à particules.

Toutefois, l'augmentation de la température des gaz d'échappement peut endommager le filtre à particules. Si le filtre est endommagé de manière importante, le véhicule peut ne plus être en conformité avec les normes précitées de dépollution.

Les procédés existants de maitrise de température des gaz d'échappement reposent sur des méthodes de contrôle par asservissement, d'une part, en boucle ouverte (BO) et, d'autre part, en boucle fermée (BF).

Les méthodes en BO sont basées sur des quantités de carburant post-injecté cartographiées et fonction du régime du moteur. Ces méthodes ne permettent pas la régénération en fonction du type de roulage, par exemple : route, autoroute ou ville. Par conséquent, elles ne permettent pas la régénération optimale du filtre à particules.

Les méthodes en BF sont basées sur une température en aval du catalyseur d'oxydation (DOC) et/ou en amont du filtre à particules. De telles méthodes en BF sont notamment décrites dans les documents publiés sous les numéros FR 2 921 416, FR 2 957 381 et US 2010/083639.

Or, pour minimiser les $NO_x$ et les $CO_2$, il est pertinent d'utiliser des architectures de ligne d'échappement comportant un catalyseur d'oxydation, un système de traitement de $NO_x$ et un filtre à particules.

C'est la raison pour laquelle les procédés de contrôle de la régénération en BF précités ne permettent pas de prendre en compte ces architectures sans prendre de risques sur la tenue thermique des composants, notamment catalyseur d'oxydation et filtre à particules.

### RESUME DE L'INVENTION

Compte tenu de ce qui précède, un problème que se propose de résoudre l'invention est de réaliser un procédé de maîtrise de la température des gaz d'échappement à l'entrée d'un filtre à particules pour tous types de lignes d'échappement.

Considérant le problème posé ci-dessus, la solution proposée de l'invention est un procédé de maîtrise de la température des gaz d'échappement à l'entrée d'un filtre à particules d'un moteur de véhicule comprenant une ligne d'échappement, ladite ligne d'échappement comportant notamment, successivement dans le sens d'écoulement des gaz un catalyseur d'oxydation,
un tube, et
un filtre à particules,
caractérisé en ce qu'il comporte des étapes de :

détermination d'une consigne de température en amont dudit filtre à particules ;

calcul d'une consigne de température en aval du catalyseur d'oxydation ;

contrôle de la température en aval du catalyseur d'oxydation ; et de détermination d'une consigne de post injection.

Ainsi, l'invention se propose de baser les calculs sur un modèle thermique de catalyseur d'oxydation et de ligne d'échappement. Elle permet, à moindre coût, notamment en termes de nombre de capteurs nécessaires pour le pilotage, de régénérer les filtres à particules pour l'ensemble des architectures de ligne d'échappement de manière performante et robuste. On comprendra qu'un système, muni d'un modèle et d'une régulation, est robuste si : la régulation du système est inchangée pour de faibles variations du modèle.

De manière avantageuse, - le procédé comporte en outre une étape de compensation de post-injection pour compenser une partie de carburant de post-injection diluée dans l'huile moteur ; - la consigne de température en amont dudit filtre à particules est cartographiée ; - ladite consigne de température en amont dudit filtre à particules est une valeur fixe apte à initier et à entretenir la combustion des suies ; - ladite consigne de température en amont dudit filtre à particules est une valeur variable fonction d'une estimation de la masse en suies contenue dans ledit filtre à particules ; - ledit calcul de ladite consigne de température en aval dudit catalyseur d'oxydation est une fonction d'une température des gaz en entrée dudit tube, d'une température extérieure à ladite ligne d'échappement, d'un débit desdits gaz au travers dudit tube et d'un coefficient de convection entre le tube et l'air ambiant, ledit coefficient étant fonction de la vitesse du véhicule ; - le calcul de ladite consigne de température en aval du catalyseur d'oxydation est une fonction d'une inversion stationnaire d'un modèle dynamique de pertes dans la ligne d'échappement, le point stationnaire étant calculé pour une température en aval dudit catalyseur d'oxydation et dudit débit des gaz au travers dudit tube ; - le calcul de ladite consigne de température en aval du catalyseur d'oxydation est une fonction d'une valeur stationnaire d'une température de ladite paroi du tube, d'une valeur stationnaire de la température des gaz en entrée dudit filtre à particules et d'une valeur cible de température en amont du filtre à particules ; - lorsque le profil de roulage est lent et lorsque le filtre à particules est fortement déporté sur la ligne d'échappement alors la consigne de température en aval du catalyseur d'oxydation est élevée jusqu'à ce que la température en amont dudit filtre à particules soit apte à initier et/ou à entretenir la combustion des suies ; et - le contrôle de la température en aval du catalyseur d'oxydation repose structurellement sur une approche de type prédicteur de Smith.

**BREVE DESCRIPTION DES FIGURES**

L'invention sera mieux comprise à la lecture de la description non limitative qui suit, rédigée au regard des dessins annexés, dans lesquels :

• La figure 1 illustre différents moyens mis en oeuvre dans un véhicule à moteur selon l'invention ;

• la figure 2 illustre une configuration de ligne d'échappement minimisant la production de $NO_x$ et de $CO_2$ ;

• la figure 3 est un schéma synoptique qui illustre les différentes étapes du procédé selon la présente invention ; et

• la figure 4 illustre le contrôle de la température en aval du catalyseur d'oxydation selon l'invention.

**DESCRIPTION DETAILLEE DE L'INVENTION**

Le procédé selon l'invention est un procédé pour une maîtrise de la température des gaz d'échappement à l'entrée d'un filtre à particules de moteur de véhicule comprenant une ligne d'échappement.

Le véhicule peut être un véhicule de moteur diesel ou essence, notamment soumis à au moins une norme sur les émissions polluantes, par exemple aux normes euro 5 et/ou euro 6. La norme euro 5 implique généralement, pour les véhicules légers, d'être munis de filtres à particules ainsi que de moteurs optimisés pour une production réduite en $NO_x$. La norme euro 6 implique généralement l'installation d'un système de post-traitement des $NO_x$ sur la ligne d'échappement du véhicule.

La présente invention est ainsi applicable industriellement car elle présente un intérêt économique pour tout constructeur automobile de véhicules à moteur soumis aux normes en vigueur.

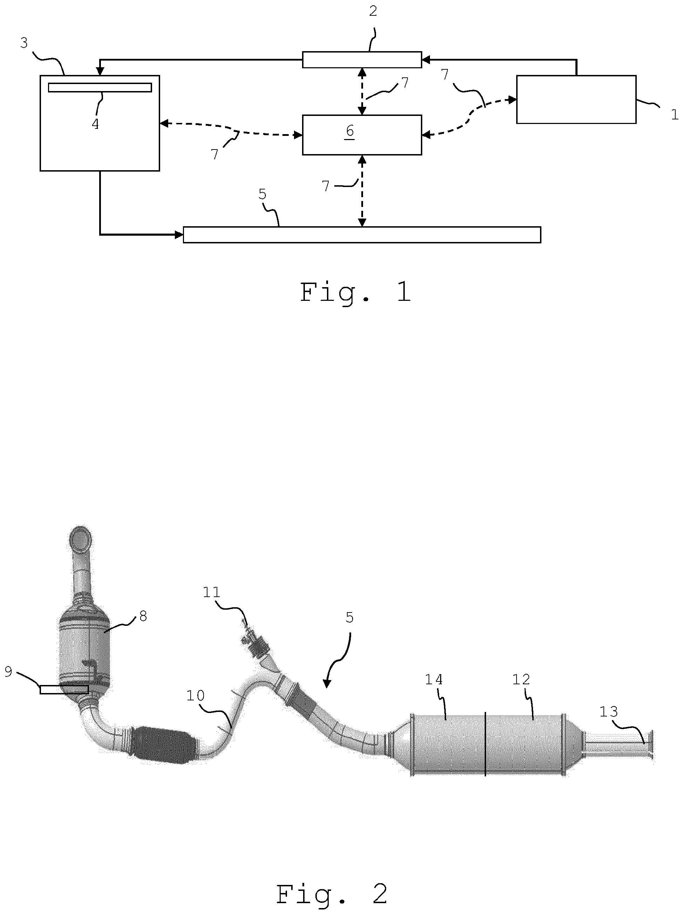

Ainsi que cela apparaît à la figure 1, les organes typiques des véhicules selon l'invention comprennent un réservoir 1, une pompe haute pression 2, un moteur 3, par exemple un moteur HDI, une injection directe à rampe commune 4, une ligne d'échappement 5 et un calculateur 6 relié aux différents organes par un CAN bus 7.

Le réservoir 1 contient typiquement un carburant et peut également contenir un additif, par exemple à l'état liquide. La pompe 2 de haute pression permet de maîtriser finement les différents moments pendant lesquels le carburant peut être injecté dans le moteur 3. La pression d'injection dans la rampe commune 4 est typiquement comprise entre 300 et 1700 bars à pleine charge.

La ligne d'échappement 5 est également illustrée sur la figure 2. Elle comporte notamment, dans le sens d'écoulement des gaz d'échappement, un catalyseur d'oxydation 8 muni d'un capteur de température 9 en aval, un tube 10, un injecteur d'additif 11, un filtre à particules 12 et un silencieux 13.

Le capteur 9, placé en aval du catalyseur d'oxydation 2, permet de mesurer la température des gaz d'échappement à la sortie du catalyseur d'oxydation 8.

Les informations utiles à la présente invention peuvent par exemple être transmises via le système CAN-bus 7 du véhicule au calculateur 6 apte à réaliser le procédé selon la présente invention.

Une configuration préférentielle de la ligne d'échappement 5 selon l'invention comprend un système de post traitement des oxydes d'azote, notamment un réducteur de catalyse sélective 14 (SCR) ou un $NO_x$Trap, ou tout système fonctionnellement équivalent pour effectuer la réduction des $NO_X$. Ce système est préférentiellement placé entre le catalyseur d'oxydation 8 et le filtre à particules 12.

En amont du réducteur de catalyse sélective 14, la ligne d'échappement décrite ci-dessus peut en outre être munie d'un système d'injection d'un mélange à base d'eau et d'urée, comme additif. Ce mélange d'eau et d'urée est apte à la réduction de $NO_x$.

De plus, le filtre à particules 12 peut comporter un capteur permettant de mesurer la masse de suie qu'il contient.

Pour initier et/ou entretenir une régénération du filtre à particules 12, il suffit d'une combustion des suies, de dépôt sur le filtre à particules 12, par élévation de la température des gaz d'échappement, à l'entrée du filtre à particules. Cette combustion est généralement effectuée à l'aide d'une quantité de carburant, non consommée par le moteur. Cette quantité est typiquement injectée par post-injection.

La post-injection aide à la régénération du filtre à particules, car elle permet d'injecter une quantité de carburant imbrûlé dans le catalyseur d'oxydation 8. Ainsi, ce carburant peut s'oxyder. Une conséquence de cette oxydation est une élévation de la température des gaz d'échappement, de manière maîtrisée, en fonction de la quantité de carburant.

Par contre, l'injection par post-injection d'une quantité de carburant peut introduire un effet de dilution d'une partie de cette quantité de carburant dans l'huile moteur.

C'est la raison pour laquelle une étape de compensation de post-injection est avantageusement mise en oeuvre, selon l'invention.

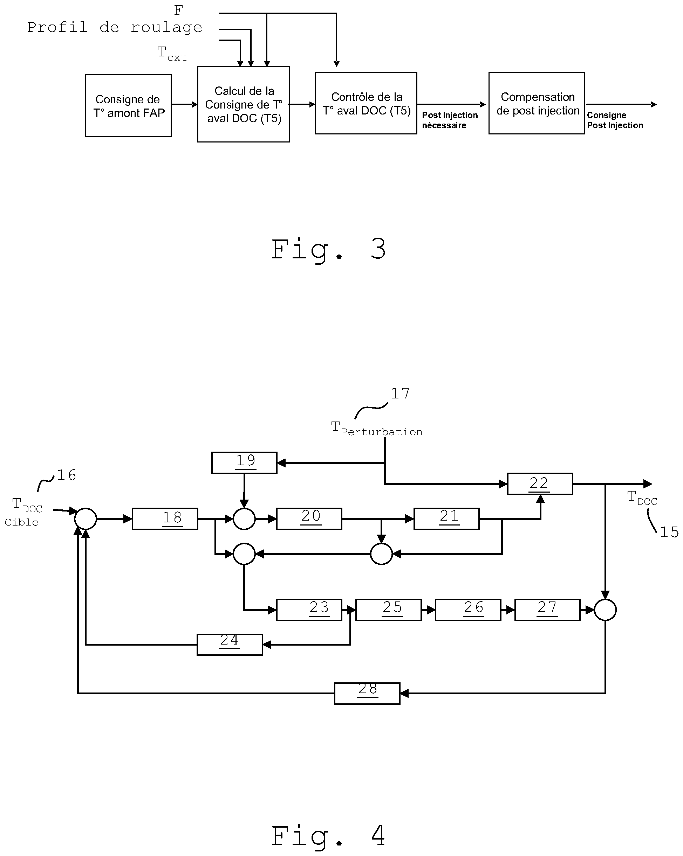

Le schéma synoptique tel que présenté sur la figure 3 illustre finalement la succession des différentes étapes du procédé de la présente invention. Il s'agit des étapes de :

- détermination d'une consigne de température amont dudit filtre à particules ;

- calcul d'une consigne de température en aval du catalyseur d'oxydation ;

- contrôle de la température aval du catalyseur d'oxydation ;

- détermination d'une consigne de post injection; et de

- compensation de post-injection pour compenser une partie de carburant de post-injection diluée dans l'huile moteur.

Une première étape du procédé selon l'invention est une étape de détermination de la consigne de température en aval du catalyseur d'oxydation. Cette consigne de température peut, par exemple, être cartographiée. De manière préférentielle, cette valeur cartographiée peut être une valeur fixe, apte à initier et/ou à entretenir la combustion des suies. Dans un autre mode de fonctionnement du procédé, cette valeur peut être calculée à l'aide d'au moins une information, transmise depuis le capteur mesurant la masse de suie présente dans le filtre à particules. Ainsi, la consigne de température, en amont du filtre à particules, est une fonction de la masse en suie en amont du filtre à particules.

Une deuxième étape du procédé selon l'invention est une étape de calcul de la température en aval du catalyseur d'oxydation selon la présente invention, repose sur un modèle thermique de la ligne d'échappement 5. Ce modèle prend en considération le catalyseur d'oxydation et la température de sortie du tube ou d'entrée du SCR. La rétention des gaz d'échappement à l'intérieur du tube étant réputée négligeable.

On obtient, en appliquant notamment les équations de thermodynamique relatives aux transferts thermiques par convection au travers d'un tube :

$$T = \frac{hS}{FC_p + hS}T^s + \frac{FC_p}{FC_p + hS}T_{in}$$

En remplaçant cette expression dans une équation exprimant la dynamique thermique de la paroi du tube $T^s$,

on obtient :

$$M^s C_p^s \frac{dT^s}{dt} = \frac{hSFC_p}{FC_p + hS}\left(T_{in} - T^s\right) + h^{ext}S\left(T^{ext} - T^s\right)$$

où :

- T est la température des gaz en sortie du tube (K) ;
- $T_{in}$ est la température des gaz en entrée du tube (K) ;
- $T^s$ est la température à la paroi du tube (K) ;
- $T^{ext}$ est la température extérieure (K) ;
- M est la masse de gaz enfermée dans le tube (kg) ;
- $C_p$ est la capacité calorifique des gaz (J.kg$^{-1}$.K$^{-1}$) ;
- $M^s$ est la masse du tuyau (kg) ;
- $C_p^s$ est la capacité calorifique du tuyau (J. kg$^{-1}$.K$^{-1}$) ;
- F est le débit de gaz (kg.s$^{-1}$) ;
- S est la surface du tuyau (m$^2$), on considère que les surfaces intérieure et extérieure sont identiques ;
- h est le coefficient de convection entre gaz et tuyau (W.m$^{-2}$.K$^{-1}$) ; et
- $h^{ext}$ est le coefficient de convection entre tuyau et air ambiant (W.m$^{-2}$.K$^{-1}$).

Selon un mode préférentiel de l'invention, cette étape de calcul de la consigne de température en aval du catalyseur d'oxydation est fonction d'une température des gaz en entrée du tube $T_{in}$, d'une température extérieure à ladite ligne d'échappement $T^{ext}$ et d'un débit F des gaz au travers du tube.

Selon un autre mode de réalisation, la partie stationnaire du modèle est retenue pour calculer la consigne de température en aval du catalyseur d'oxydation comme suit : connaissant la température $T_{in}$, en sortie catalyseur d'oxydation, et le débit de gaz F, on peut, via la seconde équation, calculer la valeur stationnaire de la température sur la paroi du tube.

$$T^s_{stationnaire} = \frac{\dfrac{hSFC_p}{FC_p + hS}T_{in} + h^{ext}S.T^{ext}}{\dfrac{hSFC_p}{FC_p + hS} + h^{ext}S}$$

Donc

$$T_{entrée\,FAP\,stationnaire} = \frac{hS}{FC_p + hS}T^s_{stationnaire} + \frac{FC_p}{FC_p + hS}T_{in}$$

Ainsi, l'écart stationnaire à compenser est :

$$\Delta = T - T_{entrée\,FAP\,stationnaire}$$

Enfin, il suffit d'ajouter cet écart stationnaire à la consigne de température, en amont du filtre à particules, pour obtenir la consigne de température en aval du catalyseur d'oxydation, selon la présente invention.

Un avantage de cette modélisation de la ligne d'échappement réside dans le fait qu'elle engendre un calcul fin et précis de la consigne de température des gaz en aval du catalyseur d'oxydation. Les interactions avec le milieu dans lequel se déplace le véhicule sont également prises en compte dans ce modèle via le coefficient de convection entre tuyau et air ambiant.

On notera qu'un modèle thermique de détente de turbine aurait pu être utilisé pour calculer cette température. Dans ce cas, on tiendra compte du modèle thermique du catalyseur d'oxydation.

Un mode préférentiel de l'étape de calcul de la consigne de température en aval du catalyseur d'oxydation telle que décrite ci-dessus prend en compte le profil de roulage du véhicule. En effet, suivant le profil de roulage du véhicule, c'est-à-dire suivant s'il roule vite ou lentement, l'échauffement du moteur diffère. On définira notamment la conduite en ville comme un profil de roulage lent ; la conduite sur route ou sur autoroute comme un profil de roulage rapide. D'une manière générale, plus le profil de roulage est lent, plus le temps de réponse thermique de la ligne d'échappement peut être important. La ligne d'échappement accuse alors un retard, en temps de réponse, par rapport aux variations de température du moteur du véhicule. Ce retard peut être notamment dû aux transferts thermiques par convection.

Par ailleurs, il est possible que le filtre à particules soit fortement éloigné du moteur. Cet éloignement est par exemple de l'ordre de quelques mètres. Ce qui a tendance à accentuer cet effet de retard.

Ainsi, pour de telles lignes d'échappement, on peut définir une consigne de température en aval du catalyseur d'oxydation plus élevée pendant une période de temps. La période de temps est celle qui permet à la température en amont du filtre à particules d'être apte à initier et/ou à entretenir la combustion des suies.

Ceci est un avantage de la présente invention en particulier pour des lignes d'échappement comportant un catalyseur de réduction sélective en amont du filtre à particules.

Un autre avantage du procédé selon la présente invention, réside en l'étape de contrôle de la température en aval du catalyseur d'oxydation. Cette étape peut être effectuée sur la base d'un contrôle de type prédicteur de Smith, tel qu'illustré à la figure 4. Cette figure illustre donc un modèle d'architecture particulier de contrôle de la température en aval du catalyseur d'oxydation.

On considère la température 15 $T_{DOC}$ mesurée en aval du catalyseur d'oxydation ainsi que la température 16 $T^{DOC}_{Cible}$ calculée par le calculateur 6. De plus, on considère une température 17 de perturbation.

L'ensemble des corrections aptes à contrôler la température en aval du catalyseur d'oxydation sont :

- un correcteur 18, typiquement un régulateur proportionnel intégral, pour permettre une montée en température sans risquer un dépassement d'une température maximum définie au préalable,

- une pré-compensation 19 typiquement pour simuler un amortissement de la température 17,

- une pré-compensation 20, typiquement pour simuler l'effet d'une variation de température due aux variations du flux de gaz,

- une saturation 21, typiquement pour limiter les phénomènes non linéaires,

- un correcteur 22, typiquement pour prendre en compte l'effet de la dilution de la quantité de carburant en post-injection,

- un premier ordre 23, typiquement pour simuler hors retard les effets de la commande sur la température,

- un correcteur 24, typiquement pour simuler les pertes statiques du catalyseur d'oxydation,

- trois correcteurs 25, 26 et 27, typiquement pour simuler le retard dynamique en réponse temporelle à la perturbation du catalyseur d'oxydation ainsi que du capteur de température 9, et

- un filtre de robustesse 28, par exemple pour pallier les variations de température ambiante.

Le prédicteur de Smith permet une compensation d'un phénomène de retard. Ici, il traite le retard de réaction thermique de la ligne d'échappement.

Le principe du prédicteur de Smith repose sur la synthèse d'un régulateur pour un procédé auquel on a enlevé son retard pur. Ensuite, on calcule un correcteur adapté au procédé avec retard, à partir du correcteur calculé sans retard pur.

Un avantage particulier du prédicteur de Smith pour la présente invention, est particulièrement pertinent pour une synthèse du correcteur à l'aide du calculateur, tel que présent dans un véhicule automobile. Plus particulièrement, le prédicteur de Smith présente un avantage pour des lignes d'échappement qui ont des retards purs élevés et variables.

## Revendications

1. Procédé pour une maîtrise de la température des gaz d'échappement à l'entrée d'un filtre à particules (12) de moteur (3) de véhicule comprenant une ligne d'échappement (5), ladite ligne d'échappement (5) comportant successivement dans le sens d'écoulement des gaz
un catalyseur d'oxydation (8),
un tube (10), et
un filtre à particules (12),
**caractérisé en ce qu'**il comporte des étapes de :

détermination d'une consigne de température en amont dudit filtre à particules (12) ;
calcul d'une consigne de température en aval du catalyseur d'oxydation (8) à partir de la consigne de température
déterminée en amont dudit filtre à particules et en prenant en compte l'effet que le tube (10) a sur la température
des gaz d'échappement;
contrôle de la température en aval du catalyseur d'oxydation (8);
détermination d'une consigne de post injection destinée à maitriser la température des gaz d'échappement en
aval du catalyseur d'oxydation (8), et de compensation de post-injection pour compenser une partie de carburant
de post-injection diluée dans l'huile moteur.

2. Procédé selon la revendication 1, **caractérisé en ce que** ladite consigne de température en amont dudit filtre à particules (12) est cartographiée.

3. Procédé selon la revendication 1 ou la revendication 2, **caractérisé en ce que** ladite consigne de température en amont dudit filtre à particules (12) est une valeur fixe apte à initier et/ou à entretenir la combustion des suies.

4. Procédé selon la revendication 1 ou la revendication 2, **caractérisé en ce que** ladite consigne de température en amont dudit filtre à particules (12) est une valeur variable fonction d'une estimation de la masse en suies contenue dans ledit filtre à particules (12).

5. Procédé selon l'une des revendications précédentes, **caractérisé en ce que** ledit calcul de ladite consigne de température en aval du catalyseur d'oxydation (8) est une fonction d'une température des gaz en entrée dudit tube (10), d'une température extérieure à ladite ligne d'échappement (5), d'un débit desdits gaz au travers dudit tube (10) et d'un coefficient de convection entre le tube (10) et l'air ambiant.

6. Procédé selon la revendication 5, **caractérisé en ce que** le coefficient de convection entre le tube (10) et l'air ambiant est fonction de la vitesse du véhicule.

7. Procédé selon l'une des revendications précédentes, **caractérisé en ce que** ledit calcul de ladite consigne de température en aval du catalyseur d'oxydation (8) est une fonction d'une inversion stationnaire d'un modèle dynamique de pertes dans la ligne d'échappement (5), le point stationnaire étant calculé pour une température en aval du catalyseur d'oxydation (8) et dudit débit des gaz au travers dudit tube (10).

8. Procédé selon l'une des revendications précédentes, **caractérisé en ce que** ledit calcul de ladite consigne de température en aval du catalyseur d'oxydation (8) est une fonction d'une valeur stationnaire d'une température de ladite paroi du tube (10), d'une valeur stationnaire de la température des gaz en entrée dudit filtre à particules (12) et d'une valeur cible de température amont du filtre à particules (12).

9. Procédé selon l'une des revendications 5 à 8, **caractérisé en ce que** lorsque le profil de roulage est lent et lorsque le filtre à particules (12) est fortement déporté sur la ligne d'échappement (5) alors la consigne de température en aval du catalyseur d'oxydation (8) est élevée jusqu'à ce que la température en amont dudit filtre à particules (12) soit apte à initier et/ou à entretenir la combustion des suies.

10. Procédé selon l'une des revendications précédentes, **caractérisé en ce que** le contrôle de la température en aval du catalyseur d'oxydation (8) repose structurellement sur une approche de type prédicteur de Smith.

**Patentansprüche**

1. Verfahren für eine Beherrschung der Temperatur der Auspuffgase am Eingang eines Partikelfilters (12) eines Motors (3) eines Fahrzeugs, eine Auspuffleitung (5) umfassend, wobei die besagte Auspuffleitung (5) in Richtung der Gasströmung nacheinander Folgendes umfasst
einen Oxidationskatalysator (8),

eine Röhre (10), und
einen Partikelfilter (12),
**dadurch gekennzeichnet, dass** es die folgenden Schritte umfasst:

Bestimmen eines Temperatursollwerts stromaufwärts des besagten Partikelfilters (12);
Berechnen eines Temperatursollwerts stromabwärts des Oxidationskatalysators (8) ausgehend vom Temperatursollwert, der stromaufwärts des besagten Partikelfilters und unter Berücksichtigung der Wirkung bestimmt wird, welche die Röhre (10) auf die Temperatur der Auspuffgase hat;
Kontrolle der Temperatur stromabwärts des Oxidationskatalysators (8);
Bestimmen eines Nacheinspritzungssollwerts, der dazu bestimmt ist, die Temperatur der Auspuffgase stromabwärts des Oxidationskatalysators (8) zu beherrschen, und einer Nacheinspritzungskompensation zum Kompensieren eines Teils des Nacheinspritzungskraftstoffs, der im Motoröl verdünnt ist.

2. Verfahren nach Anspruch 1, **dadurch gekennzeichnet, dass** der besagte Temperatursollwert stromaufwärts des besagten Partikelfilters (12) gemappt ist.

3. Verfahren nach Anspruch 1 oder Anspruch 2, **dadurch gekennzeichnet, dass** der besagte Temperatursollwert stromaufwärts des besagten Partikelfilters (12) ein feststehender Wert ist, der imstande ist, die Verbrennung von Ruß zu initiieren und/ oder zu unterstützen.

4. Verfahren nach Anspruch 1 oder Anspruch 2, **dadurch gekennzeichnet, dass** der besagte Temperatursollwert stromaufwärts des besagten Partikelfilters (12) ein variabler Wert in Abhängigkeit von einer Schätzung der Masse an Ruß ist, die im besagten Partikelfilter (12) enthalten ist.

5. Verfahren nach einem der vorhergehenden Ansprüche, **dadurch gekennzeichnet, dass** die besagte Berechnung des besagten Temperatursollwerts stromabwärts des Oxidationskatalysators (8) eine Funktion einer Temperatur der Gase am Eingang der besagten Röhre (10), einer Temperatur außerhalb der besagten Auspuffleitung (5), eines Volumenstroms der besagten Gase durch die besagte Röhre (10) und eines Koeffizienten für die Konvektion zwischen der Röhre (10) und der Umgebungsluft ist.

6. Verfahren nach Anspruch 5, **dadurch gekennzeichnet, dass** der Koeffizient für die Konvektion zwischen der Röhre (10) und der Umgebungsluft von der Geschwindigkeit des Fahrzeugs abhängig ist.

7. Verfahren nach einem der vorhergehenden Ansprüche, **dadurch gekennzeichnet, dass** die besagte Berechnung des besagten Temperatursollwerts stromabwärts des Oxidationskatalysators (8) eine Funktion einer stationären Umkehr eines dynamischen Modells von Verlusten in der Auspuffleitung (5) ist, wobei der stationäre Punkt für eine Temperatur stromabwärts des Oxidationskatalysators (8) und des besagten Volumenstroms der Gase durch die besagte Röhre (10) berechnet wird.

8. Verfahren nach einem der vorhergehenden Ansprüche, **dadurch gekennzeichnet, dass** die besagte Berechnung des besagten Temperatursollwerts stromabwärts des Oxidationskatalysators (8) eine Funktion eines stationären Werts einer Temperatur der besagten Wand der Röhre (10), eines stationären Werts der Temperatur der Gase am Eingang des besagten Partikelfilters (12) und eines Zielwerts der Temperatur stromaufwärts des Partikelfilters (12) ist.

9. Verfahren nach einem der Ansprüche 5 bis 8, **dadurch gekennzeichnet, dass**, wenn das Fahrprofil langsam ist und wenn der Partikelfilter (12) in der Auspuffleitung (5) stark versetzt ist, der Temperatursollwert stromabwärts des Oxidationskatalysators (8) erhöht wird, bis die Temperatur stromaufwärts des besagten Partikelfilters (12) imstande ist, die Verbrennung von Ruß zu initiieren und/ oder zu unterstützen.

10. Verfahren nach einem der vorhergehenden Ansprüche, **dadurch gekennzeichnet, dass** die Kontrolle der Temperatur stromabwärts des Oxidationskatalysators (8) strukturell auf einer Annäherung des Typs Smith-Prädiktor beruht.

**Claims**

1. Method for controlling the temperature of the exhaust gases at the inlet of a particle filter (12) of a vehicle engine (3) comprising an exhaust line (5), said exhaust line (5) comprising successively, in the direction of flow of the gases an oxidation catalytic converter (8),
a tube (10), and
a particle filter (12),
**characterised in that** it comprises steps of:

determining a temperature setpoint upstream of said particle filter (12);
calculating a temperature setpoint downstream of the oxidation catalytic converter (8) from the temperature setpoint determined upstream of said particle filter and taking into account the effect that the tube (10) has on the temperature of the exhaust gases;
monitoring the temperature downstream of the oxidation catalytic converter (8);
determining a post-injection setpoint intended to control the temperature of the exhaust gases downstream of the oxidation catalytic converter (8), and post-injection compensation for compensating for part of the post-injection fuel diluted in the engine oil.

2. Method according to claim 1, **characterised in that** said temperature setpoint upstream of said particle filter (12) is mapped.

3. Method according to claim 1 or claim 2, **characterised in that** said temperature setpoint upstream of said particle filter (12) is a fixed value able to initiate and/or maintain combustion of the soot.

4. Method according to claim 1 or claim 2, **characterised in that** said temperature setpoint upstream of said particle filter (12) is a variable value that depends on an estimation of the mass of soot contained in said particle filter (12).

5. Method according to any of the preceding claims, **characterised in that** said calculation of said temperature setpoint downstream of said oxidation catalytic converter (8) depends on a temperature of the gases at the inlet of said tube (10), a temperature external to said exhaust line (5), a flow rate of said gases through said tube (10) and a coefficient of convection between the tube (10) and the ambient air.

6. Method according to claim 5, **characterised in that** the coefficient of convection between the tube (10) and the ambient air is a function of the speed of the vehicle.

7. Method according to one of the preceding claims, **characterised in that** said calculation of said temperature setpoint downstream of the oxidation catalytic converter (8) depends on a stationary inversion of a dynamic model of losses in the exhaust line (5), the stationary point being calculated for a temperature downstream of the oxidation catalytic converter (8) and said flow rate of gases through said tube (10).

8. Method according to one of the preceding claims, **characterised in that** said calculation of said temperature setpoint downstream of the oxidation catalytic converter (8) depends on a stationary value of a temperature of said wall of the tube (10), a stationary value of the temperature of the gases at the inlet of said particle filter (12) and a target temperature value upstream of the particle filter (12).

9. Method according to one of claims 5 to 8, **characterised in that**, when the running profile is slow and the particle filter (12) is highly offset on the exhaust line (5), then the temperature setpoint downstream of the oxidation catalytic converter (8) is high until the temperature upstream of said particle filter (12) is able to initiate and/or maintain combustion of the soot.

10. Method according to one of the preceding claims, **characterised in that** the monitoring of the temperature downstream of the oxidation catalytic converter (8) is based structurally on an approach of the Smith predictor type.

Fig. 1

Fig. 2

Fig. 3

Fig. 4

**EP 2 479 409 B1**

**RÉFÉRENCES CITÉES DANS LA DESCRIPTION**

**Documents brevets cités dans la description**

- FR 2921416
- FR 2957381
- US 2010083639 A